# EUROPEAN PATENT APPLICATION

(11) **EP 4 447 509 A1**
(43) Date of publication of application: **16.10.2024**
(21) Application number: 23167756.8
(22) Date of filing: 13.04.2023
(51) Int. Cl.: H04W 8/18, H04W 48/18

(54) **DIFFERENTIATED CONNECTIVITY OF A COMMUNICATION NETWORK**

(71) Applicant: Deutsche Telekom AG, 53113 Bonn (DE)
(72) Inventor: BAYER, Nico, 61231 Bad Nauheim (DE); WEILER, Richard, 10785 Berlin (DE); NIKUTTA, Randolph, 10717 Berlin (DE)
(74) Representative: RDL Patentanwälte PartG mbB

(57) **Abstract**

A method for operating a communication network, wherein a terminal device connects to a communication network and receives a routing table pushed by the communication network, the pushed routing table comprising a plurality of rules assigning network slices provided by the communication network to predetermined quality of service, QoS, indicators and indicating routes to the assigned network slices; the terminal device starts executing a frontend of a distributed application, the frontend specifying a predetermined QoS indicator for communicating with a backend of the distributed application via the communication network, the backend being executed by a server connected to the communication network; and the terminal device attaches to a network slice assigned to the specified predetermined QoS indicator by the pushed routing table, the frontend and the backend communicating via the network slice attached to, and a computer program product.

## Description

The invention relates to a method for operating a communication network, wherein a terminal device connects to a communication network and receives a routing table pushed by the communication network, the pushed routing table comprising a plurality of rules assigning network slices provided by the communication network to predetermined quality of service, QoS, indicators and indicating routes to the assigned network slices; the terminal device starts executing a frontend of a distributed application, the frontend specifying a predetermined QoS indicator for communicating with a backend of the distributed application via the communication network, the backend being executed by a server connected to the communication network; and the terminal device attaches to a network slice assigned to the specified predetermined QoS indicator by the pushed routing table, the frontend and the backend communicating via the network slice attached to. The invention further relates to a computer program product.

A modern communication network provides a plurality of different network slices each slice being configured for supporting a particular class of distributed applications, i.e., the communication network allows for a differentiated connectivity. Slices are separate virtual networks established on the same physical network.

A distributed application comprises a backend and a frontend. Usually, the backend is executed by a server while the frontend is executed by a terminal device, the frontend and the backend communicating via the communication network both the terminal device and the server are connected to.

For instance, the class of distributed real-time applications is best supported by a network slice configured for guaranteeing a low and stable latency while the class of distributed streaming applications is best supported by a network slice configured for guaranteeing a continuously high bitrate. Generally speaking, different distributed applications require different qualities of service, QoS, for a proper execution and, hence, a satisfying user experience.

Thus, an operating system, OS, of the terminal device may be configured for receiving a routing table from the communication network and attaching to an appropriate slice of the communication network based on the received routing table. The routing table may comprise a plurality of entries each entry assigning a network slice to a QoS indicator and indicating a route to the assigned network slice. Upon a start of the frontend, the OS receives a QoS indicator from the frontend, selects an entry matching the received QoS indicator and routes the communication of the distributed application to a network slice determined by the selected entry.

However, a communication service provider, CSP, operating the communication network like this, i.e. without taking additional measures, is left without any knowledge and control of a usage of the provided differentiated connectivity.

It is, therefore, an object of the invention to suggest a method for operating a communication network providing a differentiated connectivity which allows a CSP to know and to control a usage of the differentiated connectivity. Another object of the invention is providing a computer program product.

One aspect of the invention is a method for operating a communication network, wherein a terminal device connects to a communication network and receives a routing table pushed by the communication network, the pushed routing table comprising a plurality of rules assigning network slices provided by the communication network to predetermined quality of service, QoS, indicators and indicating routes to the assigned network slices; the terminal device starts executing a frontend of a distributed application, the frontend specifying a predetermined QoS indicator for communicating with a backend of the distributed application via the communication network, the backend being executed by a server connected to the communication network; and the terminal device attaches to a network slice assigned to the specified predetermined QoS indicator by the pushed routing table, the frontend and the backend communicating via the network slice attached to. The pushed routing table defines the differentiated connectivity of the communication network towards the terminal device. An OS of the terminal device is configured for evaluating the pushed routing table and for attaching to an appropriate network slice provided by the communication table according to a QoS requirement of the distributed application and dependent on the pushed routing table.

According to the invention, the communication network provides a default routing table as the pushed routing table, the default routing table assigning a catching slice with a default QoS indicator to the specified predetermined QoS indicator, the catching slice being associated with a specific network slice with the specified predetermined QoS indicator. In other words, the terminal device initially attaches to the catching slice instead of a network slice appropriate for the distributed application. The catching slice is an additional network slice associated with the appropriate network slice. In order to avoid any misunderstanding it is emphasized that the catching slice does not provide the QoS indicated by the QoS indicator.

The association of the catching slice with the appropriate network slice is defined by the communication network and, hence, known to the communication network. The known association allows the communication network for knowing and controlling a usage of the differentiated connectivity by the distributed application.

Connecting to the communication network may comprise attaching to a core node of the communication network via an access node of the communication network and receiving the pushed routing table via the access node from the core node. The access node is a node of the communication network which is closest to the terminal device. The access node may be configured to be a radio access point the terminal device may wirelessly connect to.

A node, herein, is a network entity which comprises a hardware and/or a software and has a particular function within the communication network. Nodes are usually connected to each other by fiber optic, wire or radio.

Advantageously, receiving the pushed routing table comprises the core node to have a subscription of the terminal device checked by an authorization node of the communication network and to receive a user profile of the subscription from the authorization node. The authorization node stores subscriptions of terminal devices, i.e. users, of the communication network and user profiles associated with the subscriptions.

Preferably, a monitoring node of the communication network detects the terminal device attaching to the catching slice and notifies the authorization node about the detected terminal device. The monitoring node monitors the catching slice and detects any attachment to the catching slice. The monitoring node provides the authorization node with a knowledge of a usage of the provided differentiated connectivity by the terminal device.

In an embodiment, the authorization node, upon notification of the terminal device, determines a tariff option covering the specified predetermined QoS indicator and transmits an information concerning the determined tariff option to the terminal device when the terminal device is not subscribed to a tariff covering the specified predetermined QoS indicator. The tariff option may be transmitted by means of short message service, SMS, or a dedicated application, app for short, provided by the CSP and executed by the terminal device. The CSP is enabled to provide a user of the terminal device with an offer appropriate for the distributed application. Of course, the authorization node or CSP caused by the authorization node may take any alternative or additional measure upon notification of the terminal device, e.g., transmitting a special offer, a promotion or an advertisement.

The authorization node may push a specific user profile to the core node and the core node may push a specific routing table to the terminal device when the authorization node receives a subscription to the tariff option from the terminal device, the specific routing table assigning the associated specific network slice to the specified predetermined QoS indicator. The terminal device is enabled to use differentiated connectivity immediately after subscribing to the offered tariff option.

In another embodiment, the authorization node, upon notification of the terminal device, immediately pushes a specific routing table via the core node to the terminal device when the terminal device is subscribed to the tariff option covering the specified predetermined QoS indicator, the specific routing table assigning the associated specific network slice to the specified predetermined QoS indicator. In other words, the terminal device already subscribed may immediately attach to the appropriate network slice. The communication network still knows the usage of the provided differentiated connectivity by the terminal device.

The terminal device may attach to the specific network slice, the frontend and the backend communicating via the specific network slice attached to. The OS of the terminal device changes the attachment to the catching slice into an attachment to the specific network slice. The distributed application benefits from the QoS of the specific network slice immediately after attaching to the specific network slice.

Alternatively, the communication network provides the catching slice with the specified predetermined QoS indicator, the frontend and the backend communicating via the catching slice attached to. The OS of the terminal device stays attached to the catching slice and still benefits from the required QoS.

The QoS indicator may comprise a traffic category, an application ID or an internet protocol, IP, descriptor. The traffic category indicates a general purpose of the distributed application and may comprise "gaming", "automotive", "manufacture", "Internet of Things", IoT, and the like. The application ID identifies the application and implies a purpose thereof. The IP descriptor may comprise an IP address space, a domain name, a subdomain name and the like.

Preferably, a 5G cellular network is operated as the communication network, a base transceiver station, BTS, is provided as the access node and a user equipment, UE, route selection policy, URSP, is pushed as the routing table. The 4G cellular network is a radio access network, RAN. The base transceiver station of the 5G cellular network is commonly called gNB. The URSP is the 5G routing table.

The routing table may be pushed by a policy control function, PCF, of the communication network. The PCF is a control plane function, CPF, of the 5G core, 5GC network.

The communication network advantageously provides a default enhanced Mobile BroadBand, eMBB, slice having a plurality of network slice IDs or a network slice having a default eMBB configuration as the catching slice. The eMBB slice is dedicated to human-centric distributed applications providing a so called best effort connectivity, i.e., fairly distributing available spectral resources among a plurality of distributed applications.

A subscription of the terminal device may be checked by a business support system, BSS, as the authorization node. The BSS is a management plane function, MPF, of the 5GC network.

Another aspect of the invention is a computer program product, comprising a digital storage medium storing a program code. The digital storage medium comprises a compact disk, CD, a digital versatile disk, DVD, a hard disk, HD, a random access memory, RAM, chip, a universal serial bus, USB, stick, a cloud storage and the like.

According to the invention, the program code causes a computing device to carry out a method according to one of claims 1 to 14 as the monitoring node when being executed by a processor of the computing device. The monitoring node supports a CSP in knowing and controlling a usage of a differentiated connectivity provided by a communication network operated by the CSP.

It is an essential advantage of the inventive operation method that the method allows for knowing and controlling a usage of a differentiated connectivity provided by a communication network. An OS of a terminal device connecting to the communication network and executing a frontend of a distributed application requiring a particular QoS does not need any modification in order to comply with the method.

It shall be understood that the features described previously and to be described subsequently may be used not only in the indicated combinations but also in different combinations or on their own without leaving the scope of the present invention.

The invention is described in detail by means of an exemplary embodiment and with reference to the drawings. Like components are indicated by like reference numerals throughout the drawings.

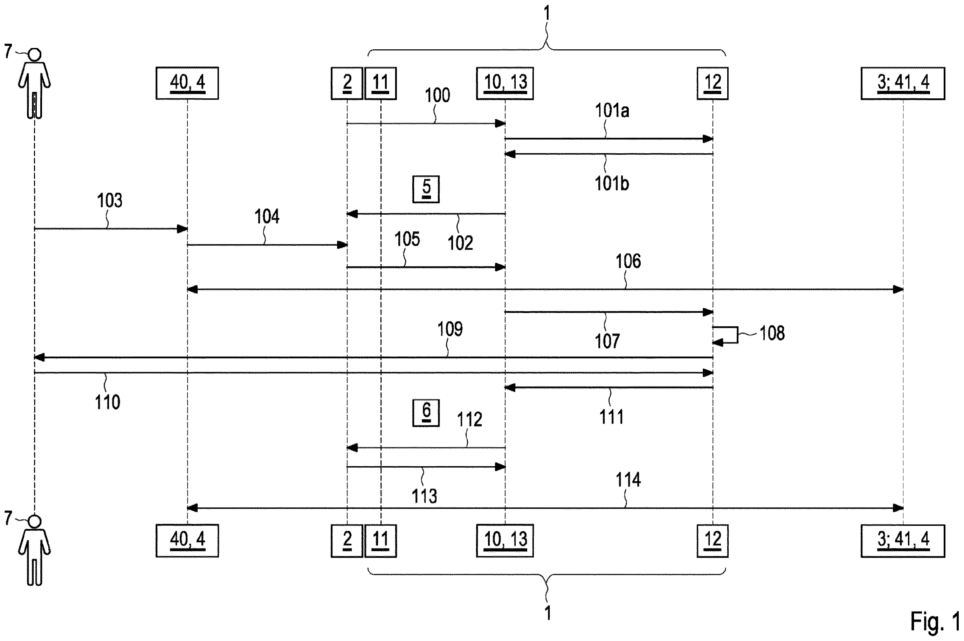

- Fig. 1: schematically shows a flow diagram of a method according to an embodiment of the invention for operating a communication network.

Fig. 1 schematically shows a flow diagram of a method according to an embodiment of the invention for operating a communication network 1. The communication network 1 may comprise a core node 10, an access node 11, an authorization node 12 and a monitoring node 13. The monitoring node 13 may be implemented by means of a computer program product. The computer program product comprises a digital storage medium storing a program code which causes a computing device to carry out the inventive method described below as the monitoring node 13 when being executed by a processor of the computing device.

A terminal device 2 and a server 3 may connect or be connected to the communication network 1. The terminal device 2 is configured for executing a frontend 40 of a distributed application 4. The server 3 is configured for executing a backend 41 of the distributed application 4.

The communication network 1 is operated as follows.

The terminal device 2 connects 100 to the communication network 1 and receives 102 a routing table 5 pushed by the communication network 1. Connecting to the communication network 1 may comprise attaching to the core node 10 of the communication network 1 via the access node 11 of the communication network 1 and receiving the pushed routing table 5 via the access node 11 from the core node 10. Receiving the pushed routing table 5 may comprise the core node 10 to have a subscription of the terminal device 2 checked 101a by the authorization node 12 of the communication network 1 and to receive 101b a user profile of the subscription from the authorization node 12.

The pushed routing table 5 comprises a plurality of rules assigning network slices provided by the communication network 1 to predetermined quality of service, QoS, indicators and indicating routes to the assigned network slices.

The terminal device 2 operated by a user 7 starts 103 executing the frontend 40 of the distributed application 4. The frontend 40 specifies 104 a predetermined QoS indicator for communicating with the backend 41 of the distributed application 4 via the communication network 1. The backend 41 is executed by the server 3 connected to the communication network 1.

The communication network 1 provides a default routing table as the pushed routing table 5. The default routing table assigns a catching slice with a default QoS indicator to the specified predetermined QoS indicator. The catching slice is associated with a specific network slice with the specified predetermined QoS indicator. The QoS indicator may comprise a traffic category, an application ID or an internet protocol, IP, descriptor.

The terminal device 2 attaches 105 to a network slice assigned to the specified predetermined QoS indicator by the pushed routing table 5. The monitoring node 13 of the communication network 1 may detect the terminal device 2 attaching to the catching slice and notify 107 the authorization node 12 about the detected terminal device 2.

When the terminal device 2 is not subscribed to a tariff covering the specified predetermined QoS indicator, the authorization node 12, upon notification of the terminal device 2, may determine 108 a tariff option covering the specified predetermined QoS indicator and transmit 109 an information concerning the determined tariff option to the terminal device 2 to be displayed for the user 7.

The authorization node 12 may push 111 a specific user profile to the core node 10 and the core node 10 may push 112 a specific routing table 6 to the terminal device 2 when the authorization node 12 receives 110 a subscription to the tariff option from the terminal device 2 operated by the user 7. The specific routing table 6 assigns the associated specific network slice to the specified predetermined QoS indicator.

When, in contrast, the terminal device 2 is subscribed to the tariff option covering the specified predetermined QoS indicator, the authorization node 12, upon notification of the terminal device 2, may immediately push 111 a specific user profile to the core node 10 and the core node 10 may push 112 a specific routing table 6 to the terminal device 2. The specific routing table 6 assigns the associated specific network slice to the specified predetermined QoS indicator.

The terminal device 2 may attach 113 to the specific network slice. The frontend 40 and the backend 41 communicate 114 via the specific network slice attached to.

Alternatively, the communication network 1 may provide the catching slice with the specified predetermined QoS indicator. The frontend 40 and the backend 41 communicate via the catching slice attached to.

In any case, the frontend 40 and the backend 41 communicate 106 via the network slice attached to.

Particularly, a 5G cellular network is operated as the communication network 1, a base transceiver station, BTS, is provided as the access node 11 and a user equipment, UE, route selection policy, URSP, is pushed as the routing table 5, 6. The routing table 5, 6 may be pushed by a policy control function, PCF, of the communication network 1. The communication network 1 may provides a default enhanced Mobile BroadBand, eMBB, slice having a plurality of network slice IDs or a network slice having a default eMBB configuration as the catching slice. A subscription of the terminal device 2 may be checked by a business support system, BSS, as the authorization node 12.

### Reference Numerals

- 1: communication network
- 10: core node
- 11: access node
- 12: authorization node
- 13: monitoring node
- 2: terminal device
- 3: server
- 4: distributed application
- 40: frontend
- 41: backend
- 5: default routing table
- 6: specific routing table
- 7: user
- 100: connecting to the communication network
- 101a: checking a subscription
- 101b: receiving a user profile
- 102: receive the default routing table
- 103: starting executing
- 104: specifying a predetermined QoS indicator
- 105: attaching to the network slice
- 106: communicating
- 107: notifying
- 108: determining a tariff option
- 109: transmitting an information
- 110: receiving a subscription
- 111: pushing a specific user profile
- 112: pushing a specific routing table
- 113: attaching to the specific network slice
- 114: communicating

## Claims

1. A method for operating a communication network (1), wherein
- a terminal device (2) connects (100) to a communication network (1) and receives (102) a routing table (5) pushed by the communication network (1), the pushed routing table (5) comprising a plurality of rules assigning network slices provided by the communication network (1) to predetermined quality of service, QoS, indicators and indicating routes to the assigned network slices;
- the terminal device (2) starts (103) executing a frontend (40) of a distributed application (4), the frontend (40) specifying (104) a predetermined QoS indicator for communicating with a backend (41) of the distributed application (4) via the communication network (1), the backend (41) being executed by a server (3) connected to the communication network (1);
- the terminal device (2) attaches (105) to a network slice assigned to the specified predetermined QoS indicator by the pushed routing table (5), the frontend (40) and the backend (41) communicating (106) via the network slice attached to;
- the communication network (1) provides a default routing table as the pushed routing table (5), the default routing table assigning a catching slice with a default QoS indicator to the specified predetermined QoS indicator, the catching slice being associated with a specific network slice with the specified predetermined QoS indicator.

2. The method according to claim 1, wherein connecting to the communication network (1) comprises attaching to a core node (10) of the communication network (1) via an access node (11) of the communication network (1) and receiving the pushed routing table (5) via the access node (11) from the core node (10).

3. The method according to claim 2, wherein receiving (102) the pushed routing table (5) comprises the core node (10) to have a subscription of the terminal device (2) checked (101a) by an authorization node (12) of the communication network (1) and to receive (101b) a user profile of the subscription from the authorization node (10).

4. The method according to claims 2 or 3, wherein a monitoring node of the communication network (1) detects the terminal device (2) attaching to the catching slice and notifies (107) the authorization node (12) about the detected terminal device (2).

5. The method according to claim 4, wherein the authorization node (12), upon notification of the terminal device (2), determines (108) a tariff option covering the specified predetermined QoS indicator and transmits (109) an information concerning the determined tariff option to the terminal device (2) when the terminal device (2) is not subscribed to a tariff covering the specified predetermined QoS indicator.

6. The method according to claim 5, wherein the authorization node (12) pushes (111) a specific user profile to the core node (10) and the core node (10) pushes (112) a specific routing table (6) to the terminal device (2) when the authorization node (12) receives (110) a subscription to the tariff option from the terminal device (2), the specific routing table (6) assigning the associated specific network slice to the specified predetermined QoS indicator.

7. The method according to claim 5, wherein the authorization node (12), upon notification of the terminal device (2), immediately pushes (111) a specific user profile to the core node (10) and the core node (10) pushes (112) a specific routing table (6) to the terminal device (2) when the terminal device (2) is subscribed to the tariff option covering the specified predetermined QoS indicator, the specific routing table (6) assigning the associated specific network slice to the specified predetermined QoS indicator.

8. The method according to claim 6 or 7, wherein the terminal device (2) attaches (113) to the specific network slice, the frontend (40) and the backend (41) communicating (114) via the specific network slice attached to.

9. The method according to claim 4, wherein the communication network (1) provides the catching slice with the specified predetermined QoS indicator, the frontend (40) and the backend (41) communicating via the catching slice attached to.

10. The method according to one of claims 1 to 9, wherein the QoS indicator comprises a traffic category, an application ID or an internet protocol, IP, descriptor.

11. The method according to one of claims 1 to 10, wherein a 5G cellular network is operated as the communication network (1), a base transceiver station, BTS, is provided as the access node (11) and a user equipment, UE, route selection policy, URSP, is pushed as the routing table (5, 6).

12. The method according to claim 11, wherein the routing table (5, 6) is pushed by a policy control function, PCF, of the communication network (1).

13. The method according to claim 11 or 12, wherein the communication network (1) provides a default enhanced Mobile BroadBand, eMBB, slice having a plurality of network slice IDs or a network slice having a default eMBB configuration as the catching slice.

14. The method according to one of claims 11 to 13, wherein a subscription of the terminal device (2) is checked by a business support system, BSS, as the authorization node (12).

15. A computer program product, comprising a digital storage medium storing a program code, the program code causing a computing device to carry out a method according to one of claims 1 to 14 as the monitoring node (13) when being executed by a processor of the computing device.
